Europäisches Patentamt

(19) European Patent Office

Office européen des brevets

(11) Numéro de publication: **0 006 196**
**B2**

(12) **NOUVEAU FASCICULE DE BREVET EUROPEEN**

(45) Date de publication du nouveau fascicule du brevet:
25.04.84

(21) Numéro de dépôt: **79101830.2**

(22) Date de dépôt: **08.06.79**

(51) Int. Cl.³: **A 47 J 31/54**, F 24 H 1/12

(54) Chauffe-eau, en particulier pour cafetière ménagère.

(30) Priorité: 09.06.78 FR 7817259

(43) Date de publication de la demande:
**09.01.80 Bulletin 80/1**

(45) Mention de la délivrance du brevet:
**18.03.81 Bulletin 81/11**

(45) Mention de la décision concernant l'opposition:
**25.04.84 Bulletin 84/17**

(84) Etats contractants désignés:
**AT BE CH DE IT NL**

(56) Documents cités:
**CH - A - 577 817**
**DE - A - 2 316 425**
**DE - A - 2 513 094**
**DE - U - 6 950 460**
**DE - U - 7 124 870**
**FR - A - 2 233 966**
**FR - A - 2 296 394**

(73) Titulaire: **MOULINEX S.A., 7 à 15, rue Jules-Ferry,
F-93170 Bagnolet (FR)**

(72) Inventeur: **Hamon, François Henri Joseph, 81 chemin de
Haut-Eclair, F-61000 Alençon (FR)**

(74) Mandataire: **May, Hans Ulrich, Thierschstrasse 27,
D-8000 München 22 (DE)**

Chauffe-eau, en particulier pour cafetière ménagère

L'invention se rapporte aux chauffe-eau, en particulier pour cafetières ménagères.

Elle concerne, plus précisément, les chauffe-eau du type comportant une plaque de fonderie chauffée par une résistance électrique et présentant en son intérieur un couloir de circulation s'étendant depuis un orifice d'entrée d'eau froide jusqu'à un orifice de sortie d'eau chaude, cette plaque de fonderie présentant une cavité en forme de poche s'étendant dans une direction parallèle aux grandes faces de cette plaque à partir d'un débouché situé sur la face périphérique de cette plaque, un élément de cloisonnement étant rapporté dans cette cavité transversalement audit débouché et s'étendant à partir de ce débouché vers l'intérieur de ladite poche pour former avec les parois internes de la cavité un espace libre qui constitue le couloir de circulation, cet élément de cloisonnement étant engagé en glissière dans des rainures pratiquées dans deux parois opposées de la cavité.

Dans les chauffe-eau connus de ce type, par exemple dans ceux décrits aux documents DE-A-2 316 425 et DE-A-2 513 094 l'élément de cloisonnement est constitué par un tiroir dans lequel est pratiqué un couloir de circulation en forme de serpent et qui présente, de ce fait, une forme assez compliquée. D'autre part, les orifices d'entrée et de sortie d'eau sont pratiqués dans l'une des grandes faces de la plaque, ce qui oblige à prévoir divers organes d'étanchéité appropriés, non seulement autour du débouché latéral recevant le tiroir, mais encore autour desdits orifices.

L'invention a pour but une simplification de la constitution de ces chauffe-eau, notamment en vue d'une économie sur le prix de revient.

Un chauffe-eau selon l'invention est caractérisé en ce que l'élément de cloisonnement est formé par une lame métallique qui laisse entre elle et les parois internes de la cavité un canal de circulation en forme de U, et en ce que le débouché reçoit un bouchon de raccordement qui s'applique de manière étanche sur le pourtour de ce débouché ainsi que sur l'extrémité de ladite lame et qui présente deux passages pratiqués de part et d'autre de cette lame et adaptés à recevoir chacun une tubulure d'eau.

Ainsi, non seulement l'élément de cloisonnement est simplifié, mais encore les organes d'étanchéité sont réduits à un bouchon unique.

Les caractéristiques et avantages de l'invention ressortiront d'ailleurs de la description qui va suivre, à titre d'exemple, en référence aux dessins annexés dans lesquels:

la figure 1 est une vue en coupe verticale d'une cafetière à laquelle est incorporé un chauffe-eau selon l'invention;

la figure 2 représente, à plus grande échelle, une coupe horizontale de ce chauffe-eau;

la figure 3 est une coupe verticale de la plaque de fonderie formant partie de ce chauffe-eau, selon la ligne III-III de la figure 2;

la figure 4 représente en élévation, à plus petite échelle, la cloison rapportée dans la cavité de la plaque de fonderie pour former le couloir de circulation;

la figure 5 est une coupe verticale de cette cloison, mais à plus grande échelle.

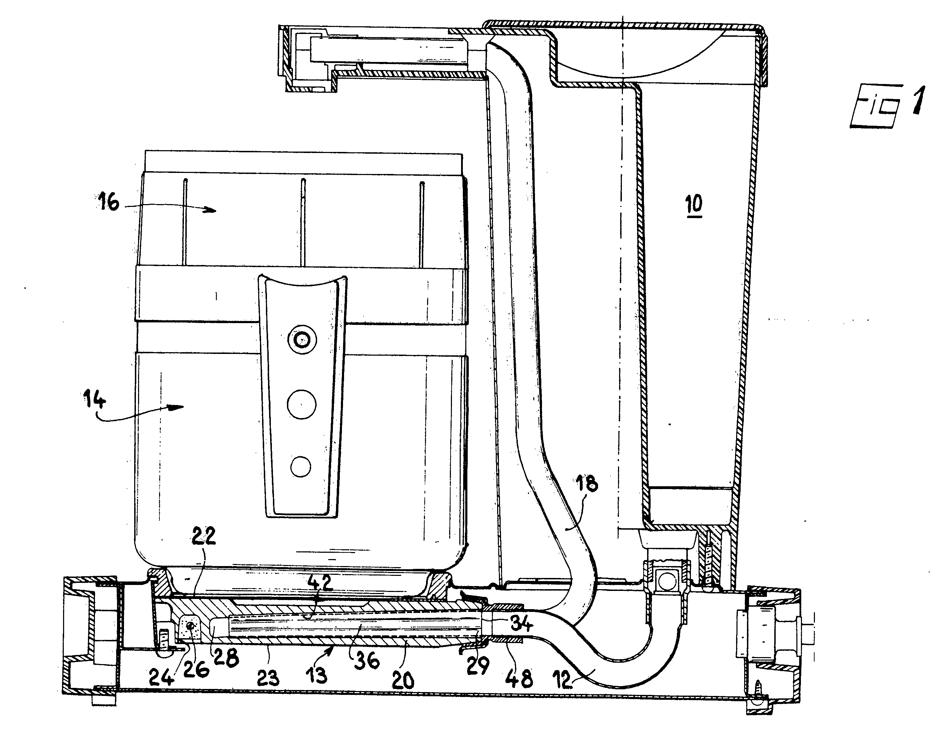

La cafetière représentée à la figure 1 comporte un réservoir d'eau froide 10 alimentant par une tubulure 12 un chauffe-eau 13, et un récipient collecteur d'infusion 14 surmonté d'un filtre 16 dans lequel se déverse l'eau chaude provenant du chauffe-eau 13 par une tubulure 18. Ce chauffe-eau comporte une plaque de fonderie 20, de forme générale circulaire, obtenue par moulage de fonte d'aluminium. Cette plaque 20 est placée horizontalement dans la cafetière. Sa face supérieure 22 sert de support au récipient collecteur 14, et sa face inférieure 23 présente une rainure à parcours en U 24 dans laquelle est logée une résistance électrique de chauffage 26. En son intérieur elle présente, dans l'espace interne à la rainure en U 24, un couloir de circulation d'eau 28 s'étendant depuis un orifice d'entrée d'eau froide 29 en relation avec la tubulure 12, jusqu'à un orifice de sortie d'eau chaude 30 en relation avec la tubulure 18.

Selon l'invention, une cavité aplatie 32 en forme de poche est pratiquée dans la plaque de fonderie et s'étend, à partir d'un débouché oblong 34 situé sur la face périphérique 35 de cette plaque, dans une direction sensiblement parallèle aux grandes faces 22 et 23. Une cloison 36, rapportée dans cette cavité 32 transversalement au débouché 34, s'étend à partir de ce débouché vers l'intérieur en laissant entre elle et les parois internes de la cavité un espace libre en forme de U qui contourne l'extrémité 37 de la cloison 36 et qui constitue le couloir de circulation 28. Afin de fabriquer la plaque par moulage en grande série, on a donné à la cavité 32 un profil de forme générale parabolique, la longueur et la largeur du débouché 34 étant respectivement plus grandes que la longueur et la largeur de la section de la cavité au voisinage du fond de la poche.

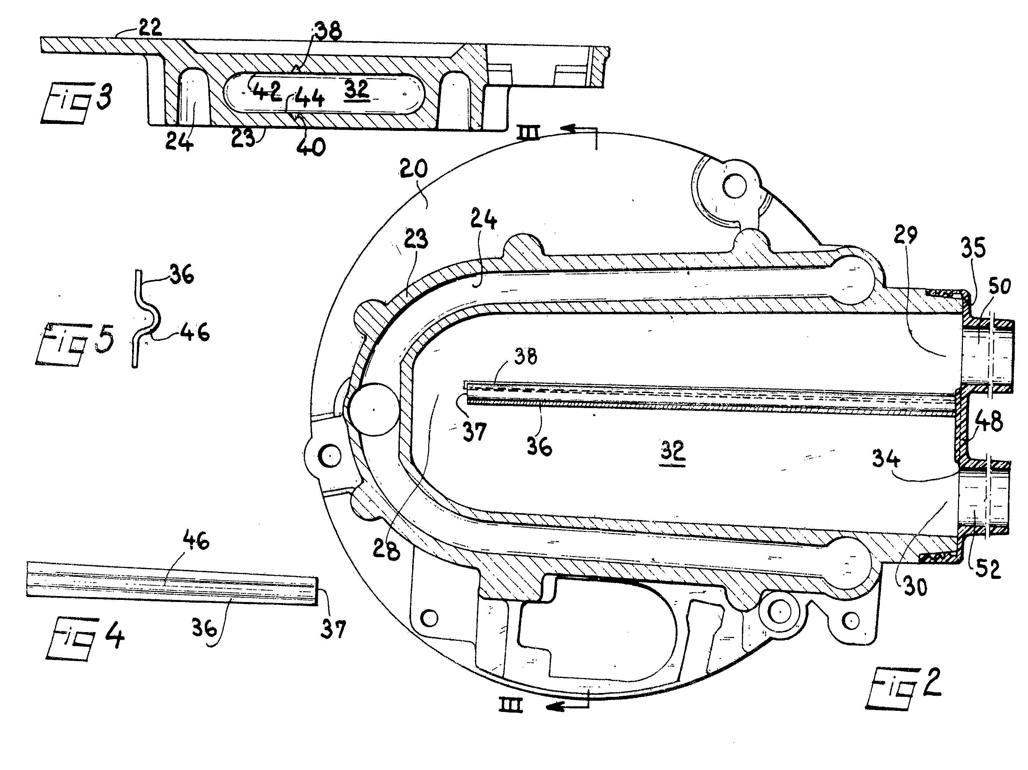

Comme on le voit mieux sur les figures 4 et 5, la cloison 36 est formée par une lame métallique engagée en glissière à partir du débouché 34 dans deux rainures 38 et 40 (fig. 3) pratiquées respectivement dans les parois supérieure 42 et inférieure 44 de la cavité 32. Pour que la lame soit maintenue dans les rainures 38 et 40 avec une étanchéité relative, on a donné à cette lame une section pourvue d'une ondulation 46 (fig. 5) qui lui assure une certaine élasticité transversale.

Dans le but d'obtenir une bonne évacuation de l'eau chaude hors du couloir de circulation 28, la paroi interne supérieure 42 va en s'élevant légèrement (fig. 1) depuis le fond de la cavité jusqu'au débouché 34.

Pour raccorder l'orifice d'entrée d'eau froide 29 à la tubulure 12 et l'orifice de sortie d'eau chaude 30 à la tubulure 18, on prévoit de placer sur le débouché 34 un bouchon de raccordement 48 en matériau souple résistant aux fortes températures, tel que du silicone, qui s'applique de manière étanche sur le pourtour de ce débouché, ainsi que sur l'extrémité adjacente de la cloison 36, et qui présente deux passages 50 et 52 pratiqués de part et d'autre de la cloison 36 et adaptés à recevoir respectivement les tubulures 12 et 18.

## Revendications

1. Chauffe-eau, en particulier pour cafetière ménagère, comportant une plaque de fonderie (20) chauffée par une résistance électrique (26) et présentant en son intérieur un couloir de circulation (28) s'étendant depuis un orifice d'entrée d'eau froide (29) jusqu'à un orifice de sortie d'eau chaude (30), cette plaque de fonderie (20) présentant une cavité (32) en forme de poche s'étendant dans une direction parallèle aux grandes faces (22, 23) de la plaque à partir d'un débouché (34) situé sur la face périphérique (35) de cette plaque, un élément de cloisonnement (36) étant rapporté dans cette cavité (32) transversalement au débouché (34) et s'étendant à partir de ce débouché vers l'intérieur de ladite poche pour former avec les parois internes de la cavité un espace libre qui constitue le couloir de circulation (28), cet élément de cloisonnement (36) étant engagé en glissière dans des rainures (38, 40) pratiquées dans deux parois opposées (42, 44) de la cavité (32), caractérisé en ce que l'élément de cloisonnement (36) est formé par une lame métallique qui laisse entre elle et les parois internes de la cavité un canal de circulation (28) en forme de U, le débouché (34) recevant un bouchon de raccordement (48) qui s'applique de manière étanche sur le pourtour de ce débouché ainsi que sur l'extrémité de la lame (36) et qui présente deux passages (50 et 52) pratiqués de part et d'autre de cette lame et adaptés à recevoir chacun une tubulure d'eau.

2. Chauffe-eau selon la revendication 1, caractérisé en ce que la lame (36) présente une section transversale pourvue d'une ondulation (46) assurant à cette lame une élasticité transversale.

3. Chauffe-eau selon l'une quelconque des revendications précédentes, caractérisé en ce que la résistance électrique (26) est disposée sur le pourtour de la cavité (32).

4. Chauffe-eau selon la revendication 3, caractérisé en ce que la résistance (26) est logée dans une rainure (24) à parcours un U ménagée dans l'une (23) des grandes faces de la plaque de fonderie.

5. Chauffe-eau selon la revendication 4, caractérisé en ce que, ce chauffe-eau étant incorporé à une cafetière du type comportant un réservoir d'eau froide (10) alimentant le chauffe-eau, et un récipient collecteur d'infusion (14) surmonté d'un filtre (16) dans lequel se déverse l'eau chaude en provenance du chauffe-eau, la plaque de fonderie (20) est placée horizontalement, la face inférieure de cette plaque étant celle où est logée la résistance (26), sa face supérieure servant de support au récipient collecteur (14), et le débouché (34) de la cavité étant tourné vers le réservoir d'eau froide (10).

6. Chauffe-eau selon la revendication 5, caractérisé en ce que la paroi interne supérieure (42) de la poche va en s'élevant légèrement depuis le fond de cette poche jusqu'au débouché (34).

## Patentansprüche

1. Heißwasserbereiter besonders für eine Haushalts-Kaffeemaschine, welcher eine Guß-Heizplatte (20) aufweist, die durch einen elektrischen Heizwiderstand (26) geheizt wird und innen einen Durchlaufkanal (28) aufweist, der sich von einer Kaltwassereinlaßöffnung (29) bis zu einer Heißwasserauslaßöffnung (30) erstreckt, wobei diese Guß-Heizplatte (20) einen taschenförmigen Hohlraum (32) aufweist, der sich von einer in der Umfangsfläche (35) dieser Platte liegenden Öffnung (34) aus in einer zu den beiden großen Flächen (22, 23) der Heizplatte parallelen Richtung erstreckt, und ein Trennwandelement (36) aufweist, das in diesen Hohlraum (32) quer zur Öffnung (34) eingesetzt ist und sich von dieser Öffnung in das Innere des taschenförmigen Hohlraums erstreckt und mit den Innenwänden des Hohlraums einen freien Raum bildet, der den Durchlaufkanal (28) bildet, wobei dieses Trennwandelement (36) in Nuten (38, 40) eingeschoben ist, die in zwei gegenüberliegenden Wänden (42, 44) des Hohlraums (32) ausgebildet sind, dadurch gekennzeichnet, daß das Trennwandelement (36) von einem Metallblatt gebildet ist, das zwischen sich und den Innenwänden des Hohlraums einen U-förmigen Durchlaufkanal (28) läßt, wobei die Öffnung (34) einen Anschlußstopfen (48) aufnimmt, der sich dicht gegen den Umfang dieser Öffnung sowie gegen das Ende des Metallblatts (36) anlegt und beiderseits dieses Metallblatts zwei Durchlaßöffnungen (50 und 52) aufweist, die jede zur Aufnahme eines Wasserleitungsstutzens eingerichtet sind.

2. Heißwasserbereiter nach Anspruch 1, dadurch gekennzeichnet, daß der Querschnitt des Metallblatts (36) eine Wellung (46) aufweist, welche dem Metallblatt eine Querelastizität verleiht.

3. Heißwasserbereiter nach einem der vorangehenden Ansprüche, dadurch gekennzeichnet, daß der elektrische Heizwiderstand (26) längs des Umfangs des Hohlraums (32) angeordnet ist.

4. Heißwasserbereiter nach Anspruch 3, dadurch gekennzeichnet, daß der Heizwiderstand (26) in eine Nut (24) eingelegt ist, die mit U-förmigem Verlauf in einer der großen Flächen (23) der Heizplatte ausgebildet ist.

5. Heißwasserbereiter nach Anspruch 4, dadurch gekennzeichnet, daß der Heißwasserbereiter eingebaut ist in eine Kaffeemaschine, welche einen den Heißwasserbereiter speisenden Kaltwasserbehälter (10) und ein Filtrat-Auffanggefäß (14) aufweist, über dem ein Filter (16) angeordnet ist, in den das vom Heißwasserbereiter kommende heiße Wasser fließt, wobei die Heizplatte (20) waagerecht angeordnet ist, der Heizwiderstand (26) in die untere Fläche dieser Heizplatte eingelegt ist, deren obere Fläche als Stützfläche für das Filtrat-Auffanggefäß (14) dient, und die Öffnung (34) des Hohlraums dem Kaltwasserbehälter (10) zugewandt ist.

6. Heißwasserbereiter nach Anspruch 5, dadurch gekennzeichnet, daß die obere Innenwand (42) des taschenförmigen Hohlraums von dessen Grund bis zur Öffnung (34) leicht ansteigt.

## Claims

1. A water heater, more specially for a home coffee-maker, having a cast plate (20) heated by an electrical resistance heater (26) and having within it a circulation duct (28) stretching from an inlet opening for cold water (29) to a hot water outlet opening (30), this cast plate (20) having a cavity (32) in the form of a pocket extending in a direction parallel to the major faces (22, 23) of the plate and extending from an opening (34) in the peripheral face (35) of the plate, while a partitioning wall element (36), held in position in the said cavity transversely with respect to the opening (34) extends from this opening towards the interior of the pocket so as to define between it and the internal walls of the cavity a free space forming the circulation duct (28), said partitioning wall element (36) being slideably received in two grooves (38, 40) in two opposite walls (42, 44) of the cavity (32), characterized in that the partitioning wall element (36) has the form of a metal strip which defines between it and the internal walls of the cavity a U-shaped circulation duct (28), the opening (34) having within it a connecting plug (48) sealingly applied to the periphery of this opening and to the end of the metal strip (36), and having two passages (50 and 52) arranged on opposite sides of this metal strip and each designed for receiving a water tube.

2. A water heater as claimed in claim 1, characterized in that the transverse section of the metal strip (36) has an undulation (46) providing the strip with transverse elasticity.

3. A water heater as claimed in any preceding claim, characterized in that the electrical resistance heater (26) is placed around the periphery of said cavity (32).

4. A water heater as claimed in claim 3, characterized in that the electrical resistance heater (26) is placed in a U-shaped groove (24) which is formed in one face (23) of the major faces of the cast plate.

5. A water heater as claimed in claim 4, characterized in that it is part of a coffee-maker having a cold water reservoir (10) for supplying the water heater and a takeup vessel (14) for the coffee infusion, surmounted by a filter (16), designed to receive the hot water coming from the water heater, and in that the cast plate (20) is placed horizontally with its lower face acting as the face where the electrical resistance heater (26) is housed, while its upper face takes the form of a support for the takeup vessel (14) and the opening (34) of the cavity faces the cold water reservoir (10).

6. A water heater as claimed in claim 5, characterized in that the upper inner wall (42) of the pocket is inclined slightly upwardly from the inner end face of this pocket to the opening (34).

Fig 1

0 006 196

Fig 2

Fig 3

Fig 4

Fig 5